(19)

Europäisches
Patentamt
European
Patent Office
Office européen
des brevets

(11) **EP 1 533 671 B1**

(12) **EUROPEAN PATENT SPECIFICATION**

(45) Date of publication and mention
of the grant of the patent:
**16.04.2008 Bulletin 2008/16**

(51) Int Cl.:
***G05B 19/401*** *(2006.01)*    ***B25J 9/16*** *(2006.01)*

(21) Application number: **04027316.1**

(22) Date of filing: **17.11.2004**

(54) **Teaching position correcting device**

Vorrichtung zur Korrektur einer gelernten Position

Appareil pour corriger une position apprise

(84) Designated Contracting States:
**DE**

(30) Priority: **18.11.2003 JP 2003388160**

(43) Date of publication of application:
**25.05.2005 Bulletin 2005/21**

(73) Proprietor: **FANUC LTD**
**Minamitsuru-gun,**
**Yamanashi 401-0597 (JP)**

(72) Inventors:
• **Ban, Kazunori**
**Minamitsuru-gun**
**Yamanashi 401-0304 (JP)**
• **Takizawa, Katsutoshi**
**Tokyo 157-0067 (JP)**

(74) Representative: **Schmidt, Steffen J.**
**Wuesthoff & Wuesthoff,**
**Patent- und Rechtsanwälte,**
**Schweigerstrasse 2**
**81541 München (DE)**

(56) References cited:
**WO-A-03/064116        US-A- 5 297 238**
**US-A- 5 854 880        US-B1- 6 321 137**

• **TSAI R Y ET AL: "A NEW TECHNIQUE FOR FULLY
AUTONOMOUS AND EFFICIENT 3D ROBOTICS
HAND/EYE CALIBRATION" IEEE
TRANSACTIONS ON ROBOTICS AND
AUTOMATION, IEEE INC, NEW YORK, US, vol. 5,
no. 3, 1 June 1989 (1989-06-01), pages 345-358,
XP000028733 ISSN: 1042-296X**

EP 1 533 671 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION

1. Field of the Invention

The present invention relates to a teaching position correcting device for a robot. Particularly, the invention relates to a teaching position correcting device that is used to correct a teaching position of a motion program for a robot when at least one of the robot and an object to be worked is moved.

2. Description of the Related Art

When a production line using a robot is moved, one of or both the robot and an object to be worked, i.e., a workpiece, are often moved as in the following cases.

- A line in operation is shifted to a separate position. For example, the whole production line is moved to a separate plant, possibly overseas.
- Once a system is started at a separate place, the system is shifted to and set in the production site. For example, once a new line is started in a provisional plant, the operation in the line is confirmed, and then the line is moved to an actual production site.
- Because of a remodeling of a line, a robot and a part of the workpiece is moved. For example, number of production items is increased, or a robot position is changed to improve productivity.
   When the line facility is moved, there occurs a difference in the positions of the robot and the workpiece after the move. Therefore, a motion program for the robot that is taught before the line is moved cannot be used as it is, and the teaching position needs to be corrected. An operator corrects the motion program while confirming each teaching position by matching it with the workpiece. This teaching correction work is very troublesome. Particularly, when the line that uses many robots in a spot welding of an automobile is to be moved, the number of steps of this teaching correction work is enormous.
   In order to shorten the time required for the teaching correction work after the line move, the following methods are so far used, either independently or in combination.
- A method according to mechanical means.
   Mark-off lines, markings, and a fixture are used to install robots and peripheral machines such that their relative positions before and after the line move are as identical as possible.
- A program shift according to touchup.
   A tool center point (hereinafter abbreviated as TCP) of the robot is touched up to three or more reference points on the workpiece or on a holder that holds the robot (i.e., the TCP is exactly matched with the reference points). A three-dimensional position of each reference point, $P_i(X_i, Y_i, Z_i)$ [i=l,...,n; n≥3], is measured. Three or more reference points of the workpiece or the holder before and after the movement are measured, respectively. A positional change of the workpiece or the holder between the positions before and after the move is obtained from the measured reference points. The teaching position of the robot program is shifted corresponding to this positional change.

Concerning calibration to be described later, the following documents are available: Roger Y. Tsai and Reimar K. Lenz, "A New Technique for Fully Autonomous and Efficient 3D Robotics Hand/Eye Calibration", IEEE Trans. on Robotics and Automation, Vol. 5, No. 3, 1989, pp. 345-358, and Japanese Patent Application Unexamined Publication No. 10-63317.

According to the above methods using mechanical means, positional precision after the re-setting is usually about a few centimeters, and it is practically difficult to secure higher precision. Therefore, teaching correction work to solve the remaining error is unavoidable. It is difficult to match a three-dimensional orientation change due to falling or inclining, for example. The precision of a fall or a decline depends on a visual observation by a setting operator.

The above method of changing the robot program according touchup is based on positional data of the workpiece or the holder obtained by measuring their positions before and after the move using the touchup of the robot. However, in actual practice, the finally obtained program cannot easily achieve high-precision work because of presence of both or one of a setting error of the TCP of the robot and a positioning error of the touchup to the reference points. According to the TCP setting or the touchup, the robot is manually operated by jog feed or the like, and the TCP of the robot is matched with a target point. In this case, the TCP setting and the positioning have different precision levels depending on the orientation of the robot when TCP setting and positioning are carried out or depending on operator's skill. Particularly, because positioning is carried out based on visual measurement, even a skilled operator cannot achieve high-precision work. Therefore, it becomes essential to correct each teaching position after the shifting.

It takes time to correctly carry out TCP setting and touchup. In many cases, the total time required to correct teaching positions hardly differs from the time required to correct teaching positions without shifting by touchup. Therefore, the shifting by touchup is not often used.

As described above, despite users' request for carrying out an accurate correction of teaching positions associated with the shifting of the robot and the workpiece in a short time, there is no practical method to achieve this.

## SUMMARY OF THE INVENTION

The present invention has been made to solve the above problems, and has an object of providing a device that can easily correct in high precision teaching positions after a shifting and can reduce load on an operator who corrects the teaching associated with the shifting.

According to one aspect of the present invention, there is provided a teaching position correcting device that corrects a teaching position of a motion program for a robot equipped with a robot mechanical unit. The teaching position correcting device includes: a storage that stores the teaching position of the motion program; a vision sensor that is provided at a predetermined part of the robot mechanical unit, and measures a position and orientation of the vision sensor relative to the predetermined part and a three-dimensional position of each of at least three sites not aligned in a straight line on an object to be worked by the robot; a position calculator that obtains a three-dimensional position of each of the at least three sites before and after a change respectively of a position of the robot mechanical unit relative to the object to be worked, based on measured data obtained by the vision sensor; and a robot control device that corrects the teaching position of the motion program stored in the storage, based on a change in the relative position obtained by the position calculator.

In this case, the robot mechanical unit has an end effector that works the object, and the vision sensor can be attached to the end effector.

According to another aspect of the present invention, there is provided another teaching position correcting device that corrects a teaching position of a motion program for a robot equipped with a robot mechanical unit. The teaching position correcting device includes: a storage that stores the teaching position of the motion program; a vision sensor that is provided at a predetermined part of other than the robot mechanical unit, and measures a three-dimensional position of each of at least three sites not aligned in a straight line on an object to be worked by the robot and a three-dimensional position of each of at least three sites not aligned in a straight line on the robot mechanical unit; a position calculator that obtains a three-dimensional position of each of the at least three sites of the object to be worked and a three-dimensional position of each of the at least three sites of the robot mechanical unit before and after a change respectively of a position of the robot mechanical unit relative to the object to be worked, based on measured data obtained by the vision sensor; and a robot control device that corrects the teaching position of the motion program stored in the storage, based on a change in the relative position obtained by the position calculator.

In this case, the vision sensor is attached to another robot mechanical unit of a second robot different from the above robot.

The vision sensor is detachably attached to the robot mechanical unit, and can be detached from the robot mechanical unit when the vision sensor stops measuring of the three-dimensional positions of the at least three sites of the object.

A position and orientation of the vision sensor relative to the robot mechanical unit can be obtained by measuring a reference object at a predetermined position from plural different points, each time when the vision sensor is attached to the robot mechanical unit.

The at least three sites of the object can be shape characteristics that the object has.

Alternatively, the at least three sites of the object can be reference marks formed on the object.

The vision sensor can have a camera that carries out an image processing, and the camera can obtain a three-dimensional position of a measured site by imaging the measured part at plural different positions. This camera can be an industrial television camera, for example.

The vision sensor can be a three-dimensional vision sensor. The three-dimensional vision sensor can be a combination of an industrial television camera and a projector.

According to any one of the above aspects of the invention, the vision sensor mounted on the robot mechanical unit measures three-dimensional positions of plural specific sites on the object to be worked. Based on three-dimensional positions measured before and after the shifting respectively, a coordinate conversion necessary to correct the teaching position is obtained. By working the coordinate conversion on the teaching position data of the motion program, the teaching position of the program is corrected.

## BRIEF DESCRIPTION OF THE DRAWINGS

The above and other objects, features and advantages of the present invention will be made more apparent by the following description of the preferred embodiments thereof, with reference to the accompanying drawings wherein:

Fig. 1 is a block diagram showing a schematic configuration of a robot including a teaching position correcting device according to the present invention;
Fig. 2 is a total configuration diagram of a robot system according to an embodiment of the present invention;
Fig. 3 is a block configuration diagram of a robot control device;
Fig. 4 is a block configuration diagram of an image processing unit;
Fig. 5 is a flowchart showing an outline of a teaching position correcting procedure according to the embodiment;
Fig. 6 is an explanatory diagram of calibration of a vision sensor;
Fig. 7 is an explanatory diagram of a measurement of positions of reference marks on a holder using a vision sensor;

Fig. 8 is a total configuration diagram of a robot system according to another embodiment of the present invention; and

Fig. 9 is a diagram showing an example of reference marks formed on a robot mechanical unit of a second robot shown in Fig. 8.

DETAILED DESCRIPTIONS

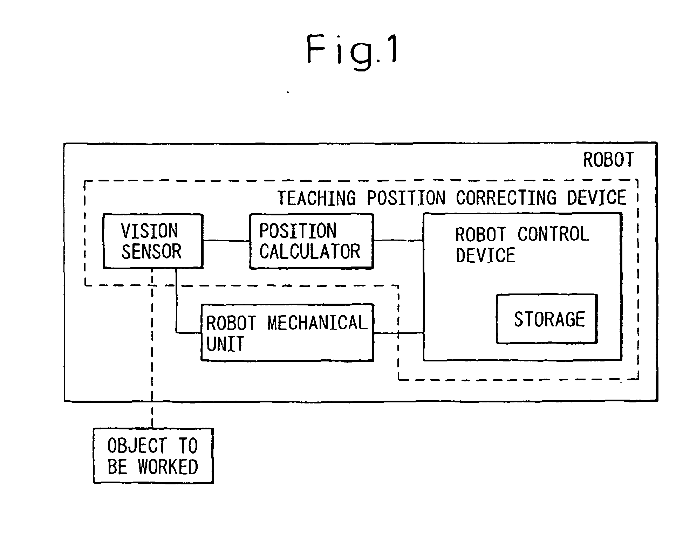

A teaching position correcting device according to embodiments of the present invention is explained below with reference to the drawings. As shown in Fig. 1, the teaching position correcting device according to the present invention is designed to correct a teaching position of a motion program for a robot when at least one of the robot having a robot mechanical unit and an object to be worked by the robot is moved. The teaching position correcting device has: a storage that stores the teaching position of the motion program; a vision sensor that is configured to measure a three-dimensional position of each of at least three sites not aligned in a straight line on the object to be worked by the robot; a position calculator that obtains a three-dimensional position of each of the at least three sites before and after a change respectively of a position of the robot mechanical unit relative to the object to be worked, based on measured data obtained by the vision sensor; and a robot control device that corrects the teaching position of the motion program stored in the storage, based on a change in the relative position obtained by the position calculator.

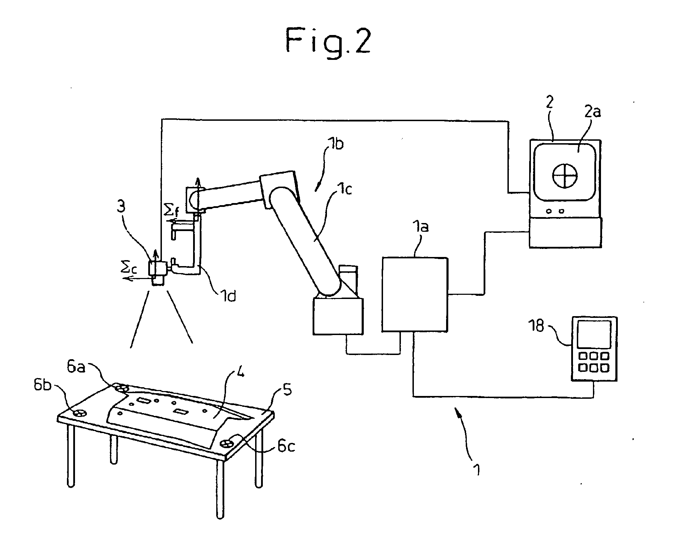

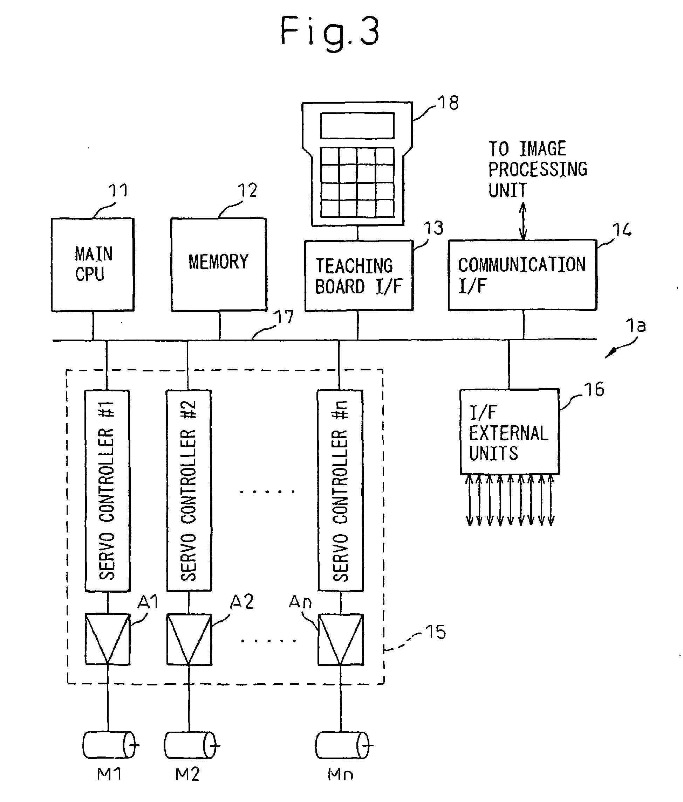

Fig. 2 is a total configuration diagram of a robot system according to an embodiment of the present invention. In Fig. 2, a reference numeral 1 denotes a known representative robot. The robot 1 has a robot control device 1a having a system configuration shown in Fig. 3, and a robot mechanical unit 1b of which operation is controlled by the robot control device 1a. The robot control device 1a has a main CPU (a main central processing unit; hereinafter, simply referred to as a CPU) 11, a bus 17 that is connected to the CPU 11, a storage or a memory 12 connected to the bus 17 consisting of a RAM (random access memory), a ROM (read-only memory) and a non-volatile memory, a teaching board interface 13, an input/output interface 16 for external units, a servo control 15, and a communication interface 14.

A teaching board 18 that is connected to the teaching board interface 13 can have a usual display function. An operator prepares, corrects, and registers a motion program for a robot by manually operating the teaching board 18. The operator also sets various parameters, operates the robot based on the taught motion program, jog feeds, in the manual mode. A system program that supports the basic function of the robot and the robot control device is stored in the ROM of the memory 12. The motion program (in this case, a spot welding) of the robot taught according to the application and relevant set data are stored in the non-volatile memory of the memory 12. A program and parameters used to carry out the processing relevant to the correction of the teaching position data to be described later are also stored in the non-volatile memory of the memory 12. The RAM of the memory 12 is used for a storage area to temporarily store various data processed by the CPU 11.

The servo control 15 has servo controllers #1 to #n, where n is a total number of axes of the robot, and n is assumed to be equal to 6 in this case. The servo control 15 receives a shift command prepared through operations (such as a path plan preparation, and interpolation and an inverse transformation based on the plan) to control the robot. The servo control 15 outputs torque commands to servo amplifiers A1 to An based on the shift command and feedback signals received from pulse coders not shown belonging to the axes. The servo amplifiers A1 to An supply currents to servomotors of the respective axes based on the torque commands, thereby driving the servomotors. The communication interface 14 is connected to the position calculator, that is, an image processing unit 2 shown in Fig. 2. The robot control device 1a exchanges commands relevant to measurement and measured data described later with the image processing unit 2 via the communication interface 14.

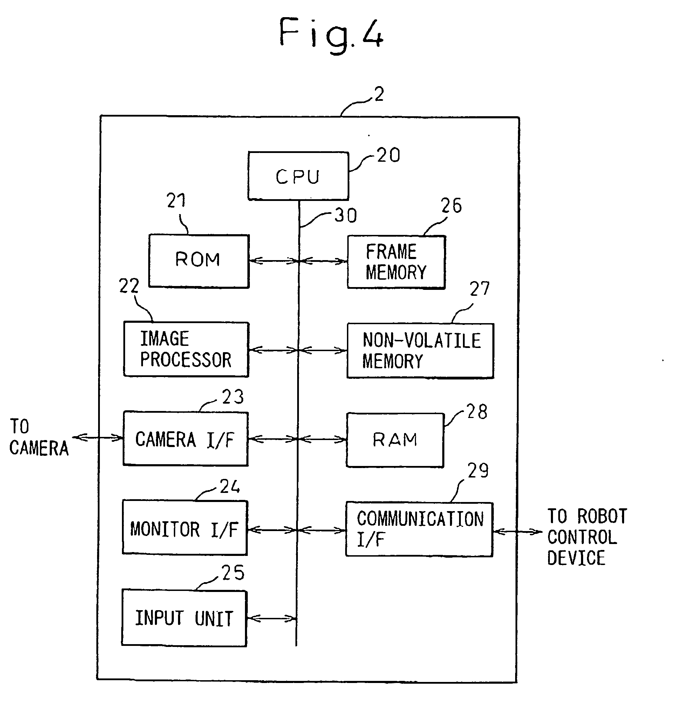

The image processing unit 2 has a block configuration as shown in Fig. 4. The image processing unit 2 has a CPU 20 including microprocessors, and also has a ROM 21, an image processor 22, a camera interface 23, a monitor interface 24, an input/output (I/O) unit 25, a frame memory (i.e., an image memory) 26, a non-volatile memory 27, a RAM 28, and a communication interface 29, that are connected to the CPU 20 via a bus line 30, respectively.

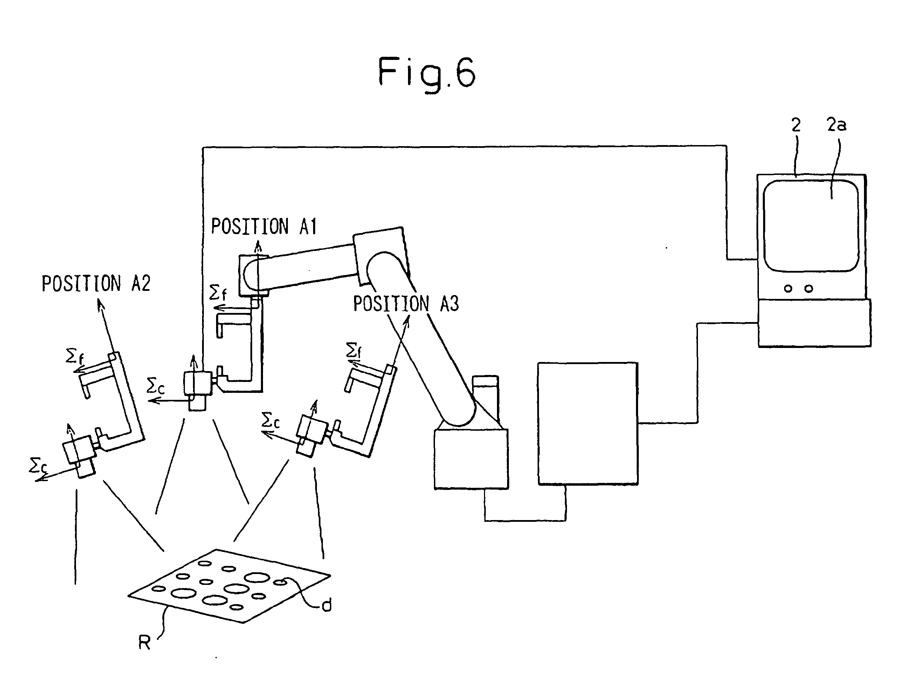

A camera as an imaging unit of a vision sensor 3, that is, a CCD (charge-coupled device) camera in this case, is connected to the camera interface 23. When the camera receives an imaging command via the camera interface 23, the camera picks up an image using an electronic shutter function incorporated in the camera. The camera sends a picked-up video signal to the frame memory 26 via the camera interface 23, and the frame memory 26 stores the video signal in the form of a grayscale signal. A display such as a CRT (cathode ray tube) or an LCD (liquid crystal display) is connected to the monitor interface 24, as a monitor 2a (refer to Fig. 2 and Fig. 6). The monitor 2a displays images currently picked up by the camera, past images stored in the frame memory 26, or images processed by the image processor 22, according to need.

The image processor 22 analyses the video signal of the workpiece stored in the frame memory 26. The image processor 22 recognizes selected reference marks 6a, 6b, and 6c, not aligned in a straight line, that indicate positions of three sites on a holder 5. Based on this recognition, a three-dimensional position of each of the marks 6a, 6b, and 6c is obtained, as described later in detail. A program and parameters for this purpose are stored in the non-volatile memory 27. The RAM 28 temporarily stores data that the CPU 20 uses to execute various processing. The communication interface 29 is connected to the robot control device via the communication interface 14 at the robot control device side.

Referring back to Fig. 2, an end effector such as a work tool 1d (a welding gun for spot welding in the present example) is fitted to a front end of a robot arm 1c that the robot mechanical unit 1b of the robot 1 has. The robot 1 carries out a welding to a workpiece 4 (a sheet metal to be welded in the present example). The workpiece 4 is held on the holder 5. The workpiece 4 and the holder 5 keep a constant relative positional relationship between them. This relative relationship does not change after a shift to be described later. A representative holder 5 is a fixture having a clamp mechanism that fixes the sheet metal. The object to be worked (hereinafter simply referred to as an object) according to the present embodiment is the workpiece 4, or the workpiece 4 and the. holder 5 when the holder 5 is used.

The motion program for the robot that carries out a welding is taught in advance, and is stored in the robot control device 1a. The vision sensor (i.e., a sensor head) 3 is connected to the image processing unit 2. The image processing unit 2 processes an image input from the vision sensor 3, and detects a specific point or a position of a shape characteristic within the sensor image.

According to the present embodiment, the vision sensor 3 is the CCD camera that picks up a two-dimensional image. The vision sensor 3 is detachably attached to a predetermined part such as the work tool 1d of the robot, with suitable fitting means, such as absorption utilizing a permanent magnet or clamping using a vise function, for example. The vision sensor 3 can be once detached from the work tool 1d after a measuring before the shifting described later, and mounted again after the shifting. Otherwise, the work tool 1d can be shifted in a state of being mounted with the vision sensor 3, when this has no problem. In the former case, one vision sensor can be used to correct teaching positions of plural robots. A relative relationship between a coordinate system Σf of a mechanical interface on a final link of the robot 1 and a reference coordinate system Σc of the vision sensor can be set in advance, or can be set by calibration when the vision sensor 3 is fitted to the work tool 1d. When the vision sensor 3 is once detached after the measuring before the shifting, calibration is also carried out after the shifting. The vision sensor is calibrated according to a known technique, which is briefly explained later.

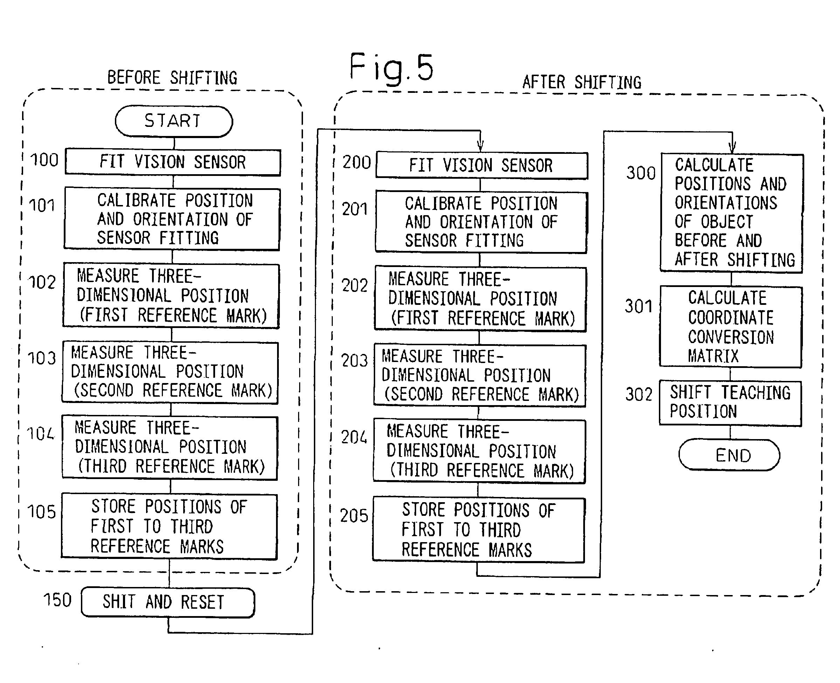

As described above, according to the present invention, when a position of the robot 1 changes relative to the object after at least one of the robot 1 and the holder 5 is shifted, the teaching position of the motion program for the welding robot can be completely corrected easily and accurately. For this purpose, in this embodiment, a processing procedure described in a flowchart shown in Fig. 5 is executed.

In the flowchart shown in Fig. 5, the processing at steps 100 to 105 concerns the measuring before the shifting. Before the shifting, the measuring is prepared, and three-dimensional positions of the three reference marks formed on the holder 5 are measure, at these steps. At step 200 and afterward, the processing concerns the measuring after the shifting. After the shifting, the measuring is prepared, and three-dimensional positions of the three reference marks are measured, at steps 200 to 205. At steps 300 to 302, a move distance of the holder from the robot is calculated based on the mark positions before and after the shifting, and the teaching position of the motion program for the robot, taught before the shifting, is corrected. The outline operation at each step is explained below. In the following explanation, parentheses [ ] are used as a symbol that represents a matrix.

Step 100: The vision sensor (i.e., CCD camera) 3 is fitted to the work tool 1d. When the vision sensor 3 has a sensor head equipped with a camera and a projector, this sensor head is fitted to the work tool 1d. The vision sensor 3 is detachably fitted, and is once detached later (refer to step 150).

Step 101: A sensor fitting position and orientation is calibrated to obtain a relative position and orientation relationship between the coordinate system Σf of a final link of the robot and the reference coordinate system Σc of the fitted vision sensor (i.e., camera). A known calibration method can be suitably used. Fig. 6 shows an example of the disposition when one of the calibration methods is employed. First, a reference object R used for calibration, which includes plural dots d arrayed in a known interval, is placed within a robot work area. This reference object R is the one that is generally used to calibrate the vision sensor.

The operator shifts, in a manual mode like jog feed, the robot to a first position A1 where the reference object R is within the field of vision of the vision sensor. The operator operates the keyboard of the image processing unit, to instruct the input of an image for a first calibration. The image processing unit 2 picks up an image from the vision sensor. The image processing unit analyzes the reference object R for calibration, and obtains data of a position and orientation [D1] of the reference object R viewed from the sensor coordinate system Σc, from the positions of the dots on the image, dot intervals, and a dot layout. At the same time, the image processing unit fetches a position and orientation [A1] of the coordinate system Σf of the final link at the imaging time, from the robot control device via the communication interface, and stores [D1] and [A1] into the memory of the image processing unit.

Similarly, the robot is moved to a separate position A2, and [D2] and [A2] are stored. Further, the robot is moved to a position A3 that is not aligned in a straight line connecting between A1 and A2, and [D3] and [A3] are stored. In general, [Di] and [Ai] are obtained at three or more different positions not aligned in a straight line.

The image processing unit calculates a position and orientation [S] of the sensor coordinate system $\Sigma c$ relative to the final link $\Sigma f$, from plural pairs of [Di] and [Ai] obtained in this way, and stores the calculates result [S]. Several methods of calculating [S] are known and, therefore, a detailed explanation is omitted (refer to "A New Technique for Fully Autonomous and Efficient 3D Robotics Hand/Eye Calibration", IEEE Trans. on Robotics and Automation, Vol. 5, No. 3, 1989, pp. 345-358).

Several methods of calibrating a three-dimensional vision sensor having a camera and a projector combined together are also known and, therefore, a detailed explanation is omitted (for example, refer to Japanese Patent Application Unexamined Publication No. 10-63317).

In the above example, the relationship between the coordinate system $\Sigma f$ of a final link and the reference coordinate system $\Sigma c$ of the vision sensor is set by calibration. When a camera fitting fixture is designed to be able to fit the vision sensor to the final link of the robot in the same position and orientation each time, calibration can be omitted and a relationship between $\Sigma c$ and $\Sigma f$ known in advance can be set to the image processing unit from the input unit like the keyboard.

When calibration is carried out each time when the vision sensor is fitted like in the present embodiment, it is not necessary to take into account the precision of fitting the vision sensor to the work tool. In other words, even when the fitting of the vision sensor to the work tool has an error, calibration can absorb this error, and therefore, there is an advantage that the fitting error does not affect the precision of measurement. When high repeatability of position and orientation is not required at each fitting time, this also has an advantage of being able to use a simple fitting mechanism such as a magnet or a vise mechanism.

Steps 102, 103, 104 and 105: After ending the calibration, three-dimensional positions of the first to the third reference marks (refer to 6a to 6c in Fig. 2) formed on the holder 5 that holds the workpiece 4 are measured. The three reference marks are selected at positions not aligned in a straight line. Each of these reference marks is formed in a circle or a cross shape, and is prepared or posted to the workpiece or the holder, when the workpiece or the holder has no feature that the vision sensor can easily detect, such as a plane sheet.

Instead of artificially providing the reference marks, ready-made parts having a shape characteristic, when present, can be used. Holes and corners of which positions can be accurately obtained by image processing are preferable for these parts. There is no particular limit to the parts so long as they have a feature of which position the vision sensor can detect. A part of or the whole reference marks, or alternative shape characteristics or characteristic parts, may be provided on the workpiece 4.

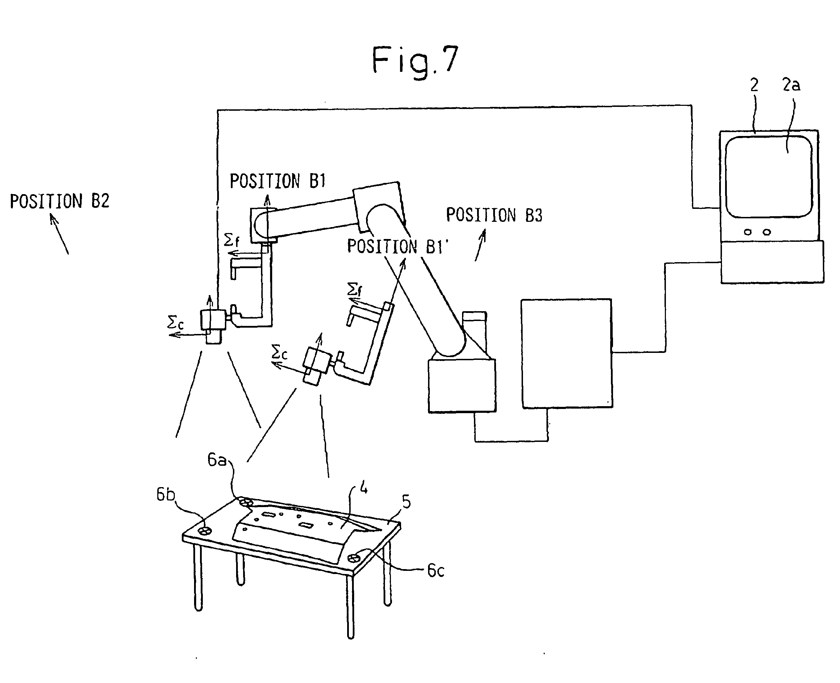

Specifically, as shown in Fig. 7, the operator operates the robot to move the robot to a position B1 at which the first reference mark 6a is in the vision field of the vision sensor. The operator instructs to input an image from the keyboard of the image processing unit. The image processing unit picks up the image from the sensor, and detects the position of the first reference mark 6a on the image. At the same time, the image processing unit fetches a position [B1] of the final link $\Sigma f$ at the imaging time, from the robot control device via the communication interface.

Next, the operator shifts the robot from B1 to a position B1' a certain distance from B1. The image processing unit picks up the image of the sensor based on the instruction from the operator, detects the position of the first reference mark 6a on the image, and fetches a robot position [B1'], in a similar manner to that of fetching the position at B1.

The position of the sensor coordinate system $\Sigma c$ at [B1] and [B1'] in the robot coordinate system is obtained from [B1], [B1'], and the position and orientation [S] of the sensor coordinate system $\Sigma c$ relative to the final link $\Sigma f$ obtained by the calibration. Using this position and the position of the mark 6a on the image detected at [B1] and [B1'], a three-dimensional position P1(x1, y1, z1) of the mark 6a in the robot coordinate system can be obtained, based on a known stereo view principle. When the vision sensor is a three-dimensional vision sensor using a projector, the position P1(x1, y1, z1) of each reference mark can be measured by imaging at one robot position.

The obtained position P1(x1, y1, z1) is sent to the robot control device via the communication interface, and is stored in the memory within the robot control device. The resolution of a general vision sensor is from 1/500 to 1/1000 or above of the range of the field of vision. Therefore, the vision sensor can measure positions of the reference marks in substantially higher precision than that achieved by visual observation.

Similarly, the operator shifts the robot to positions where the second and third reference marks 6b and 6c are within the field of vision of the sensor respectively, measures three-dimensional positions P2(x2, y2, z2) and P3(x3, y3, z3) of the second and third marks respectively, and stores these three-dimensional positions in the memory within the robot control device. To shift the robot to each measuring position, the operator can manually shift the robot by jog feed. Alternatively, a robot motion program to measure the mark measuring positions is prepared in advance, and each measuring position is taught to the motion program. The measured positions of the three reference marks can be stored in the memory of the image processing unit.

Step 150: After the reference marks are measured before the shifting, the vision sensor can be detached or does not need to be detached from the work tool. The robot 1 and the holder 5 are shifted to separate positions, and are set up again.

Steps 200 and 201: After the shifting, the vision sensor is fitted to the front end of the robot work tool again, and calibration is carried out again in the same process as that before the shifting. When the vision sensor is kept fitted to the front end of the robot work tool, these steps can be omitted.

Steps 202, 203, 204 and 205: In the layout after the shifting, positions of the reference marks 6a, 6b and 6c on the holder are measured again in the same process as that before the shifting. Obtained mark positions after the shifting, P1'(x1', y1', z1'), P2'(x2', y2', z2') and P3' (x3', y3', z3') are stored. At this stage, the reference mark positions before the shifting, P1(x1, y1, z1), P2(x2, y2, z2) and P3(x3, y3, z3), and the reference mark positions after the shifting, P1'(x1', y1', z1'), P2'(x2', y2', z2') and P3'(x3', y3', z3'), for the three reference marks on the holder 5 are stored in the memory of the robot control device.

The operator operates the robot teaching board 18 to instruct the motion program of which teaching positions should be corrected. Next, the operator instructs the memory area in which the positions of the three reference marks before and after the shifting respectively are stored, and instructs to correct the teaching positions of the motion program.

Step 300: The robot control device calculates a matrix [W1] that expresses the position and orientation of the holder before the shifting, from the reference mark positions P1, P2 and P3 before the shifting.

Step 301: The robot control device calculates a matrix [W2] that expresses the position and orientation of the holder after the shifting, from the reference mark positions P1', P2' and P3' after the shifting.

These matrices before and after the shifting have the following relationship, where P denotes the teaching position before the shifting and P' denotes the teaching position after the shifting.

$$\text{inv}[W1]\,P = \text{inv}[W2]\,P' \qquad (1)$$

where inv[Wi] is an inverse matrix of [Wi]. From the above expression, using W1, W2 and P, the teaching position P' to be corrected after the shifting is obtained as follows.

$$P' = [W2]\ \text{inv}[W1]\,P \qquad (2)$$

Therefore, when the matrix [W2] inv[W1]P is multiplied to the teaching position P before the shifting on the left side, the teaching position after the shifting can be obtained. Based on this, [W2] inv[W1]P is calculated within the robot control device.

Step 302: Coordinate conversion is carried to each teaching position of the assigned motion program, using the above expression (2). As a result, the teaching position after correcting the relative positional deviation between the robot and the object due to the shifting can be obtained.

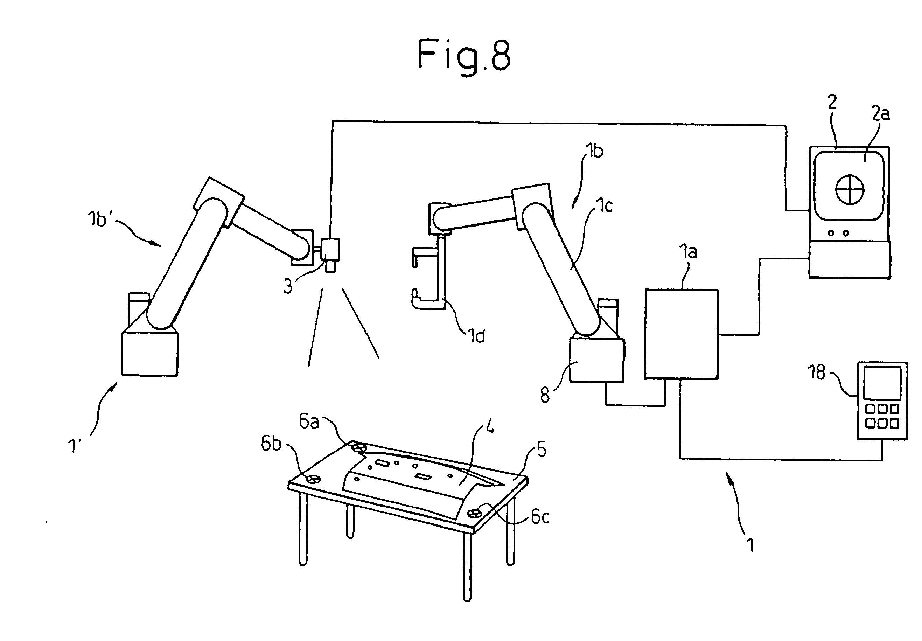

The mounting of the vision sensor onto the work robot having the end effector is explained above. As another embodiment of the present invention, a second robot 1' including another robot mechanical unit 1b' can be provided in addition to the robot 1 that carries out the work, as shown in Fig. 8. The robot mechanical unit 1b' has the vision sensor 3 that measures three-dimensional positions of the reference marks 6a to 6c or alternative shape characteristics. In this case, it is necessary to obtain the position of the robot mechanical unit 1b that works the object, in addition to the position of the object.

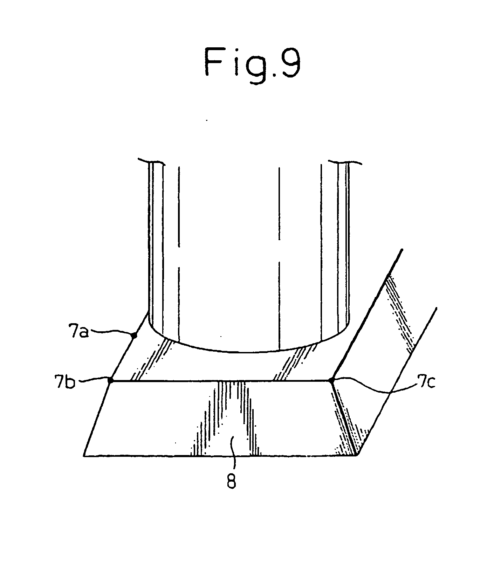

For this purpose, as shown in Fig. 9, reference marks 7a to 7c are set to at least three sites (three sites in the example) that are not aligned in a straight line, on a robot base 8 of the robot mechanical unit 1b, and these position coordinates before and after the shifting can be measured using the vision sensor 3 mounted on the robot mechanical unit 1b', in a similar manner to that when the three reference marks 6a to 6c on the holder 5 are measured. Preferably, the reference marks 7a to 7c on the robot mechanical unit 1b are set to sites that do not move when the orientation of the robot mechanical unit 1b changes, like the robot base 8.

When the reference marks are set to the sites of which positions change according to the orientation of the robot mechanical unit 1b, preferably the robot mechanical unit 1b takes the same orientation at the measuring time before the shifting and at the measuring time after the shifting. When the robot mechanical unit 1b takes a different orientation, it is necessary to obtain a change in the position of the robot after the shifting by taking the difference of orientations into consideration. This requires a complex calculation, and can easily generate error.

To shift the program, a position of the robot mechanical unit 1b relative to the other robot mechanical unit 1b' mounted with the vision sensor is calculated based on the three reference marks 7a to 7c of the robot mechanical unit 1b. This relative position is calculated in the same method as that used to calculate the position based on the reference marks 6a to 6c in the above embodiment, and therefore, a detailed explanation of this calculation is omitted.

A position (i.e., a matrix) of the holder 5 relative to the robot mechanical unit 1b is calculated using the obtained position of the robot mechanical unit 1b. The teaching position is shifted at step 300 and after in the same method as that used in the above embodiment (where the measuring robot and the robot of which teaching positions are corrected are the same).

According to the present invention, the number of steps of teaching correction work due to the shifting can be decreased by taking advantage of the following effects (1) and (2).

(1) The vision sensor measures positions, without using a touchup method which involves positioning based on visual recognition. Therefore, a high-precision measuring, which cannot be achieved based on visual recognition, can be achieved. Because visual confirmation is not necessary, the measurement does not depend on the skill of the operator. Because the vision sensor automatically carries out the measurement, the work is completed in a short time.

(2) The vision sensor recognises the positions and orientations of the front end of the arm of the robot and the vision sensor, by looking at a reference object from plural points. Therefore, the vision sensor can be mounted when necessary. The position and orientation of a part where the vision sensor is mounted does not require high precision. Therefore, the work can be carried out easily.

While the invention has been described with reference to specific embodiments chosen for the purpose of illustration, it should be apparent that numerous modifications could be made thereto, by one skilled in the art, without departing from the basic concept and scope of the invention.

**Claims**

1. A teaching position correcting device that corrects a teaching position of a motion program for a robot (1) equipped with a robot mechanical unit (1b), comprising:

   a storage (12) that stores the teaching position of the motion program;
   a vision sensor (3) that measures a three-dimensional position of each of at least three features (6a, 6b, 6c) not aligned in a straight line on an object (4, 5) to be worked by the robot (1);
   a position calculator (2) that obtains a three-dimensional position of each of the at least three features (6a, 6b, 6c) before and after a change respectively of a position of the robot mechanical unit (1b) relative to the object (4, 5) to be worked, based on measured data obtained by the vision sensor (3) before and after the change; and
   a robot control device (1a) that corrects the teaching position of the motion program stored in the storage (12), based on a change in the relative position obtained by the position calculator (2).

2. The teaching position correcting device as set forth in claim 1, wherein the vision sensor (3) is provided at a predetermined part of the robot mechanical unit (1b), and measures a position and orientation of the vision sensor (3) relative to the predetermined part, and
   wherein the position calculator obtains the three-dimensional position of each of the at least three features (6a, 6b, 6c) by using the position and orientation of the vision sensor (3) relative to the predetermined part.

3. The teaching position correcting device as set forth in claim 2, wherein the robot mechanical unit (1b) comprises an end effector (1d) that works the object (4, 5), and the vision sensor (3) is attached to the end effector (1d).

4. The teaching position correcting device as set forth in claim 2, wherein the vision sensor (3) is detachably attached to the robot mechanical unit (1b), and can be detached from the robot mechanical unit (1b) when the vision sensor (3) stops measuring of the three-dimensional positions of the at least three features (6a, 6b, 6c) of the object (4, 5).

5. The teaching position correcting device as set forth in claim 2, wherein a position and orientation of the vision sensor (3) relative to the robot mechanical unit (1b) is obtained by measuring a reference object (R) at a predetermined position from plural different points, each time when the vision sensor (3) is attached to the robot mechanical unit (1b).

6. The teaching position correcting device as set forth in claim 1, wherein the vision sensor (3) is provided at a predetermined part of other than the robot mechanical unit (1b), and measures a three-dimensional position of each of at least three features (7a, 7b, 7c) not aligned in a straight line on the robot mechanical unit (1b); and wherein
   the position calculator (2) obtains a three-dimensional position of each of the at least three features (7a, 7b, 7c) of the robot mechanical unit (1b) before and after the change respectively of the position of the robot mechanical unit (1b) relative to the object (4, 5) to be worked.

7. The teaching position correcting device as set forth in claim 6, wherein the vision sensor (3) is attached to another robot mechanical unit (1b') of a second robot (1') different from the robot (1).

8. The teaching position correcting device as set forth in claim 7, wherein the vision sensor (3) is detachably attached to the robot mechanical unit (1b') of the second robot (1'), and can be detached from the robot mechanical unit (1b') of the second robot (1') when the vision sensor (3) stops measuring of the three-dimensional positions of the at least three features (6a, 6b, 6c) of the object (4, 5).

9. The teaching position correcting device as set forth in claim 7, wherein a position and orientation of the visions sensor (3) relative to the robot mechanical unit (1b') of the second robot (1') is obtained by measuring a reference object (R) at a predetermined position from plural different points, each time when the vision sensor (3) is attached to the robot mechanical unit (1b') of the second robot (1').

10. The teaching position correcting device as set forth in one of claims 1 - 9, wherein the at least three features (6a, 6b, 6c) of the object (4, 5) are shape characteristics of the object (4, 5).

11. The teaching position correcting device as set forth in one of claims 1 - 9, wherein the at least three features (6a, 6b, 6c) of the object (4, 5) are reference marks formed on the object (4, 5).

12. The teaching position correcting device as set forth in one of claims 1 - 9, wherein the vision sensor (3) is a camera that carries out an image processing, and the camera obtains a three-dimensional position of a measured feature by imaging the measured part at plural different positions.

13. The teaching position correcting device as set forth in one of claims 1 - 9, wherein the vision sensor (3) is a three-dimensional vision sensor.


**Patentansprüche**

1. Vorrichtung zur Korrektur einer gelernten Position, die eine gelernte Position eines Bewegungsprogrammes für einen Roboter (1) korrigiert, der mit einer mechanischen Robotereinheit (1b) ausgerüstet ist, wobei die Vorrichtung folgendes aufweist:

einen Speicher (12), der die gelernte Position des Bewegungsprogrammes speichert; einen Bildsensor (3), der eine dreidimensionale Position von jedem von mindestens drei Merkmalen (6a, 6b, 6c) misst, die nicht entlang einer geraden Linie an einem Objekt (4, 5) angeordnet sind, welches durch den Roboter (1) zu bearbeiten ist; einen Positionsberechner (2), der eine dreidimensionale Position von jedem von den mindestens drei Merkmalen (6a, 6b, 6c) gewinnt, und zwar jeweils vor und nach einer Veränderung einer Position der mechanischen Robotereinheit (1b) in Bezug auf das Objekt (4, 5), welches zu bearbeiten ist, und basierend auf gemessenen, durch den Bildsensor (3) vor und nach der Veränderung gewonnenen Daten; und eine Robotersteuerungseinrichtung (1a), welche die gelernte Position des im Speicher (12) gespeicherten Bewegungsprogramms und zwar basierend auf einer Veränderung in der vom Positionsberechner (2) gewonnenen relativen Position korrigiert.

2. Vorrichtung zur Korrektur einer gelernten Position nach Anspruch 1, wobei der Bildsensor (3) an einem vorbestimmten Teil der mechanischen Robotereinheit (1b) vorgesehen ist und eine Position und Orientierung des Bildsensors (3) relativ zu dem vorbestimmten Teil misst, und
wobei der Positionsberechner die dreidimensionale Position von jedem von den mindestens drei Merkmalen (6a, 6b, 6c) durch Verwendung der Position und Orientierung des Bildsensors (3) relativ zu dem vorbestimmten Teil gewinnt.

3. Vorrichtung zur Korrektur einer gelernten Position nach Anspruch 2, wobei die mechanische Robotereinheit (1b) einen Endeffektor (1d) aufweist, der das Objekt (4, 5) bearbeitet, und wobei der Bildsensor (3) an dem Endeffektor (1d) angebracht ist.

4. Vorrichtung zur Korrektur einer gelernten Position nach Anspruch 2, wobei der Bildsensor (3) entfernbar an der mechanischen Robotereinheit (1b) angebracht ist und von der mechanischen Robotereinheit (1b) entfernt werden kann, wenn der Bildsensor (3) mit der Messung der dreidimensionalen Positionen der mindestens drei Merkmale (6a, 6b, 6c) des Objekts (4, 5) aufhört.

5. Vorrichtung zur Korrektur einer gelernten Position nach Anspruch 2, wobei eine Position und Orientierung des Bildsensors (3) relativ zu der mechanischen Robotereinheit (1b) durch Messung eines Referenzobjekts (R) an einer vorbestimmten Position von einer Mehrzahl verschiedener Punkte aus gewonnen wird, und zwar jedes Mal dann, wenn der Bildsensor (3) an der mechanischen Robotereinheit (1b) angebracht wird.

6. Vorrichtung zur Korrektur einer gelernten Position nach Anspruch 1, wobei der Bildsensor (3) an einem vorbestimmten Teil vorgesehen ist, welches nicht zu der mechanischen Robotereinheit (1b) gehört, und wobei der Bildsensor (3) eine dreidimensionale Position von jedem von mindestens drei Merkmalen (7a, 7b, 7c) misst, die nicht entlang einer geraden Linie an der mechanischen Robotereinheit (1b) angeordnet sind; und wobei
der Positionsberechner (2) eine dreidimensionale Position von jedem von den mindestens drei Merkmalen (7a, 7b, 7c) der mechanischen Robotereinheit (1b) gewinnt, und zwar jeweils vor und nach der Veränderung der Position der mechanischen Robotereinheit (1b) in Bezug auf das Objekt (4, 5), welches zu bearbeiten ist.

7. Vorrichtung zur Korrektur einer gelernten Position nach Anspruch 6, wobei der Bildsensor (3) an einer weiteren mechanischen Robotereinheit (1b') eines zweiten, vom Roboter (1) verschiedenen Roboters (1') angebracht ist.

**8.** Vorrichtung zur Korrektur einer gelernten Position nach Anspruch 7, wobei der Bildsensor (3) entfernbar an der mechanischen Robotereinheit (1b') des zweiten Roboters (1') angebracht ist und von der mechanischen Robotereinheit (1b') des zweiten Roboters (1') entfernt werden kann, wenn der Bildsensor (3) mit der Messung der dreidimensionalen Positionen der mindestens drei Merkmale (6a, 6b, 6c) des Objekts (4, 5) aufhört.

**9.** Vorrichtung zur Korrektur einer gelernten Position nach Anspruch 7, wobei eine Position und Orientierung des Bildsensors (3) relativ zu der mechanischen Robotereinheit (1b') des zweiten Roboters (1') durch Messung eines Referenzobjekts (R) an einer vorbestimmten Position von einer Mehrzahl verschiedener Punkte aus gewonnen wird, und zwar jedes Mal dann, wenn der Bildsensor (3) an der mechanischen Robotereinheit (1b') des zweiten Roboters (1') angebracht wird.

**10.** Vorrichtung zur Korrektur einer gelernten Position nach einem der Ansprüche 1-9, wobei die mindestens drei Merkmale (6a, 6b, 6c) des Objekts (4, 5) charakteristische Gestaltmerkmale des Objekts (4, 5) sind.

**11.** Vorrichtung zur Korrektur einer gelernten Position nach einem der Ansprüche 1-9, wobei die mindestens drei Merkmale (6a, 6b, 6c) des Objekts (4, 5) auf dem Objekt (4, 5) ausgebildete Referenzmarkierungen sind.

**12.** Vorrichtung zur Korrektur einer gelernten Position nach einem der Ansprüche 1 - 9, wobei der Bildsensor (3) eine Kamera ist, die eine Bildverarbeitung durchführt, und wobei die Kamera eine dreidimensionale Position eines gemessenen Merkmals durch Abbilden des gemessenen Teils bei einer Mehrzahl unterschiedlicher Positionen gewinnt.

**13.** Vorrichtung zur Korrektur einer gelernten Position nach einem der Ansprüche 1 - 9, wobei der Bildsensor (3) ein dreidimensionaler Bildsensor ist.

**Revendications**

**1.** Dispositif de correction de position d'apprentissage qui corrige une position d'apprentissage d'un programme de déplacement d'un robot (1) équipé d'une unité mécanique de robot (1b) comprenant :

une unité de mémorisation (12) qui mémorise la position d'apprentissage du programme de déplacement ;
un capteur de vision (3) qui mesure une position en trois dimensions de chacun d'au moins trois éléments (6a, 6b, 6c) non alignés en ligne droite sur un objet (4, 5) devant être usiné par le robot (1) ;
un calculateur de position (2) qui obtient une position en trois dimensions de chacun des au moins trois éléments (6a, 6b, 6c) avant et après un changement respectivement d'une position de l'unité mécanique de robot (1b) par rapport à l'objet (4, 5) devant être usiné, sur la base de données mesurées obtenues par le capteur de vision (3) avant et après le changement ; et un dispositif de commande de robot (1a) qui corrige la position d'apprentissage du programme de déplacement mémorisé dans l'unité de mémorisation (12), sur la base d'un changement dans la position relative obtenue par le calculateur de position (2).

**2.** Dispositif de correction de position d'apprentissage selon la revendication 1, dans lequel le capteur de vision (3) est prévu au niveau d'un composant prédéterminé de l'unité mécanique de robot (1b) et mesure une position et orientation du capteur de vision (3) par rapport au composant prédéterminé, et dans lequel le calculateur de position obtient la position en trois dimensions de chacun des au moins trois éléments (6a, 6b, 6c) en utilisant la position et l'orientation du capteur de vision (3) par rapport au composant prédéterminé.

**3.** Dispositif de correction de position d'apprentissage selon la revendication 2, dans lequel l'unité mécanique de robot (1b) comprend un organe terminal effecteur (1d) qui usine l'objet (4, 5), et le capteur de vision (3) est attaché à l'organe terminal effecteur (1d).

**4.** Dispositif de correction de position d'apprentissage selon la revendication 2, dans lequel le capteur de vision (3) est attaché de manière détachable à l'unité mécanique de robot (1b) et peut être détaché de l'unité mécanique de robot (1b) lorsque le capteur de vision (3) arrête de mesurer les positions en trois dimensions des au moins trois éléments (6a, 6b, 6c) de l'objet (4, 5).

**5.** Dispositif de correction de position d'apprentissage selon la revendication 2, dans lequel une position et une orientation du capteur de vision (3) par rapport à l'unité mécanique de robot (1b) sont obtenues en mesurant un objet de référence (R) au niveau d'une position prédéterminée depuis plusieurs points différents, chaque fois que le capteur de vision (3) est attaché à l'unité mécanique de robot (1b).

**6.** Dispositif de correction de position d'apprentissage selon la revendication 1, dans lequel le capteur de vision (3) est prévu au niveau d'un composant prédéterminé d'une autre unité que l'unité mécanique de robot (1b) et mesure une position en trois dimensions de chacun des au moins trois éléments (7a, 7b, 7c) non alignés en ligne droite sur l'unité mécanique de robot (1b) ; et dans lequel le calculateur de position (2) obtient une position en trois dimensions de chacun des au moins trois éléments (7a, 7b, 7c) de l'unité mécanique de robot (1b) avant et après le changement respectivement de la position de l'unité mécanique de robot (1b) par rapport à l'objet (4, 5) devant être usiné.

7. Dispositif de correction de position d'apprentissage selon la revendication 6, dans lequel le capteur de vision (3) est attaché à une autre unité mécanique de robot (1b') d'un deuxième robot (1') différent du robot (1).

8. Dispositif de correction de position d'apprentissage selon la revendication 7, dans lequel le capteur de vision (3) est attaché de manière détachable à l'unité mécanique de robot (1b') du deuxième robot (1') et peut être détaché de l'unité mécanique de robot (1b') du deuxième robot (1') lorsque le capteur de vision (3) arrête de mesurer les positions en trois dimensions des au moins trois éléments (6a, 6b, 6c) de l'objet (4, 5).

9. Dispositif de correction de position d'apprentissage selon la revendication 7, dans lequel une position et une orientation du capteur de vision (3) par rapport à l'unité mécanique de robot (1b') du deuxième robot (1') sont obtenues en mesurant un objet de référence (R) au niveau d'une position prédéterminée depuis plusieurs points différents, chaque fois que le capteur de vision (3) est attaché à l'unité mécanique de robot (1b') du deuxième robot (1').

10. Dispositif de correction de position d'apprentissage selon l'une quelconque des revendications 1 à 9, dans lequel les au moins trois éléments (6a, 6b, 6c) de l'objet (4, 5) sont des caractéristiques de forme de l'objet (4, 5).

11. Dispositif de correction de position d'apprentissage selon l'une quelconque des revendications 1 à 9, dans lequel les au moins trois éléments (6a, 6b, 6c) de l'objet (4, 5) sont des marques de référence formées sur l'objet (4, 5).

12. Dispositif de correction de position d'apprentissage selon l'une quelconque des revendications 1 à 9, dans lequel le capteur de vision (3) est un appareil photo qui réalise un traitement d'image, et l'appareil photo obtient une position en trois dimensions d'un élément mesuré en réalisant un traitement d'image du composant mesuré au niveau de plusieurs positions différentes.

13. Dispositif de correction de position d'apprentissage selon l'une quelconque des revendications 1 à 9, dans lequel le capteur de vision (3) est un capteur de vision en trois dimensions.

# Fig.1

# Fig.2

# Fig.3

MAIN CPU 11

MEMORY 12

TEACHING BOARD I/F 13

COMMUNICATION I/F 14

18

TO IMAGE PROCESSING UNIT

17

1a

SERVO CONTROLLER #1

SERVO CONTROLLER #2

SERVO CONTROLLER #n

I/F EXTERNAL UNITS 16

A1

A2

An

15

M1

M2

Mn

# Fig.4

TO CAMERA

TO ROBOT CONTROL DEVICE

Fig.5

BEFORE SHIFTING

START

100 | FIT VISION SENSOR

101 | CALIBRATE POSITION AND ORIENTATION OF SENSOR FITTING

102 | MEASURE THREE-DIMENSIONAL POSITION (FIRST REFERENCE MARK)

103 | MEASURE THREE-DIMENSIONAL POSITION (SECOND REFERENCE MARK)

104 | MEASURE THREE-DIMENSIONAL POSITION (THIRD REFERENCE MARK)

105 | STORE POSITIONS OF FIRST TO THIRD REFERENCE MARKS

150 | SHIT AND RESET

AFTER SHIFTING

200 | FIT VISION SENSOR

201 | CALIBRATE POSITION AND ORIENTATION OF SENSOR FITTING

202 | MEASURE THREE-DIMENSIONAL POSITION (FIRST REFERENCE MARK)

203 | MEASURE THREE-DIMENSIONAL POSITION (SECOND REFERENCE MARK)

204 | MEASURE THREE-DIMENSIONAL POSITION (THIRD REFERENCE MARK)

205 | STORE POSITIONS OF FIRST TO THIRD REFERENCE MARKS

300 | CALCULATE POSITIONS AND ORIENTATIONS OF OBJECT BEFORE AND AFTER SHIFTING

301 | CALCULATE COORDINATE CONVERSION MATRIX

302 | SHIFT TEACHING POSITION

END

EP 1 533 671 B1

Fig.6

# Fig.7

POSITION B3

POSITION B1'

POSITION B1

POSITION B2

$\Sigma_f$

$\Sigma_c$

$\Sigma_f$

$\Sigma_c$

2 2a

4 5

6a

6b

6c

# Fig.8

EP 1 533 671 B1

# Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10063317 A

**Non-patent literature cited in the description**

- **ROGER Y. TSAI ; REIMAR K. LENZ.** A New Technique for Fully Autonomous and Efficient 3D Robotics Hand/Eye Calibration. *IEEE Trans. on Robotics and Automation,* 1989, vol. 5 (3), 345-358

- A New Technique for Fully Autonomous and Efficient 3D Robotics Hand/Eye Calibration. *IEEE Trans. on Robotics and Automation,* 1989, vol. 5 (3), 345-358